Europäisches Patentamt

European Patent Office

Office européen des brevets

(19)

(11) Numéro de publication: **0 153 256**
**A2**

(12) **DEMANDE DE BREVET EUROPEEN**

(21) Numéro de dépôt: **85400307.6**

(22) Date de dépôt: **20.02.85**

(51) Int. Cl.⁴: **A 01 K 31/02, A 01 K 31/10**

(30) Priorité: **22.02.84 FR 8402649**

(43) Date de publication de la demande: **28.08.85**
**Bulletin 85/35**

(84) Etats contractants désignés: **AT BE CH DE GB IT LI LU NL SE**

(71) Demandeur: **Cassou, Robert, Rue Clémenceau, F-61300 L'Aigle (FR)**
Demandeur: **Cassou, Maurice, Rue Clémenceau, F-61300 L'Aigle (FR)**
Demandeur: **Cassou, Bertrand, Saint Symphorien des Bruyeres, F-61300 L'Aigle (FR)**

(72) Inventeur: **Cassou, Robert, Rue Clémenceau, F-61300 L'Aigle (FR)**
Inventeur: **Cassou, Maurice, Rue Clémenceau, F-61300 L'Aigle (FR)**
Inventeur: **Cassou, Bertrand, Saint Symphorien des Bruyeres, F-61300 L'Aigle (FR)**

(74) Mandataire: **Rodhain, Claude, Cabinet Claude RODHAIN 30, rue La Boétie, F-75008 Paris (FR)**

(54) **Enceinte pour parquer les animaux, notamment cage pour oiseaux d'élevage.**

(57) Le problème à résoudre consiste à rendre automatique le verrouillage et le déverrouillage du châssis devant l'ouverture.

Cette enceinte comprend une ouverture de part et d'autre de laquelle sont disposés deux moyens de support, à au moins l'un desquels est fixé un ou des liens flexibles 1a, 1b, 1c, 1d à un niveau intermédiaire de l'ouverture, tandis qu'un châssis est monté mobile entre deux positions d'obturation et de libération de l'ouverture par ce ou ces liens flexibles.

Suivant l'invention, chaque lien flexible est fixé à demeure sur les deux moyens de support, tandis que le châssis mobile (12) porte des moyens (17a, ..., 20a, 17b, ..., 20d) de décalage transversal du lien flexible entre ledit niveau intermédiaire et l'un des niveaux extrêmes (15, 16) de ladite ouverture (14).

L'invention trouve une application avantageuse sur les batteries de cages pour oiseaux d'élevage.

Enceinte pour parquer les animaux, notamment cage pour oiseaux d'élevage.

La présente invention concerne les enceintes pour parquer les animaux, notamment les cages pour oiseaux d'élevage, du type comprenant d'une part un bâti délimitant au moins un compartiment présentant sur au moins un côté une ouverture de part et d'autre de laquelle sont disposés deux moyens de supports suivant l'une de ses deux directions principales correspondant au contour du bâti et en retrait par rapport à elle, l'un deux étant situé à une distance égale à au moins sa dimension suivant la direction choisie, tandis qu'il est solidaire de ce moyen de support au moins un lien flexible orienté suivant ladite direction et à un niveau intermédiaire de l'ouverture suivant l'autre direction, et d'autre part un châssis mobile suivant la première direction entre deux positions dans l'une desquelles ledit lien est situé en travers de l'ouverture suivant ladite direction, tandis que dans l'autre il en est situé au dehors. Grâce à cet agencement, un déplacement du châssis, soit manuel, soit commandé par moteur, amène alternativement le lien soit en travers de l'ouverture, empêchant ainsi toute entrée ou sortie de l'animal, soit en dehors de cette ouverture, permettant alors une telle entrée ou sortie.

Dans une réalisation pratique connue, par exemple par la demande de brevet européen n° 82.400.753 au nom des présents demandeurs (publication n° 2.092.625 du 2 novembre 1983), le châssis mobile est constitué par un cadre offrant une ouverture de mêmes dimensions que celle du compartiment, et le lien flexible est mobile avec ce cadre en formant une boucle sans fin qui passe sur deux éléments de renvoi solidaires des deux moyens de support audit niveau intermédiaire et qui comporte deux brins provenant de ces deux éléments, et fixés par leurs extrémités libres au même niveau du cadre, tandis qu'un troisième brin les relie en suivant un trajet situé en dehors de l'ouverture, soit à un niveau supérieur ou inférieur à celle-ci et sensiblement dans son plan, soit à l'arrière du compartiment, dans un plan parallèle.

Dans une application très avantageuse d'une telle enceinte connue, le bâti comporte une batterie de cages constituée de plusieurs rangées et/ou colonnes de compartiments présentant toutes leurs ouvertures dans un seul et même plan, éventuellement avec deux batteries situées dos à dos et présentant leurs ouvertures suivant deux surfaces parallèles. Dans les deux cas, il est prévu autant de châssis, de moyens de guidage de ceux-ci et de liens flexibles et paires d'éléments de renvoi que de rangées si la direction de guidage est horizontale, ou que de colonnes si cette direction est verticale, les moyens de support s'étendant quant à eux respectivement sur toute la hauteur ou la longueur de la batterie. Par contre, dans le cas d'une batterie simple, la boucle sans fin de chaque lien flexible est avantageusement prévue légèrement en avant de la surface des ouvertures des compartiments, tandis que dans le cas d'une batterie double (dos-à-dos), elle est avantageusement prévue dans un plan perpendiculaire aux surfaces de ces ouvertures, ce lien étant alors solidaire de deux châssis mobiles associés respectivement à chacune des deux surfaces de la batterie double, au niveau de l'étage de cages considéré.

Dans le cas plus particulier des cages pour oiseaux d'élevage, tels que poules, dindes, pintades, faisans ou autres, et en raison de la proportion relative du corps de l'oiseau par rapport aux dimensions usuelles des compartiments ou cages, il est de préférence prévu deux à quatre liens flexibles parallèles disposés à des niveaux intermédiaires différents de l'ouverture, de manière à ce que les écartements obtenus entre eux et avec le cadre ne permettent pas à l'animal de s'échapper. Les liens flexibles sont avantageusement des câbles, les éléments de renvoi des poulies à position réglable en hauteur et en largeur, et les moyens de guidage des rails recevant des galets solidaires du cadre.

Il se trouve toutefois que, dans les réalisations du type précité qui ont été effectivement construites, la ou les ouvertures du ou des compartiments sont obturées par des châssis en forme de portes coulissantes que l'on déverrouille, déplace et reverrouille à la main, et ainsi à chaque opération successive. Le verrouillage et le déverrouillage s'obtiennent par la manoeuvre d'organes particuliers prévus à cet effet.

Or, une telle manoeuvre, au verrouillage ou au déverrouillage, exige un temps relativement important lorsqu'il s'agit d'un nombre important de rangées et/ou de colonnes de compartiments, notamment dans le cas d'élevage industriel des oiseaux où les batteries de cage présentent plusieurs niveaux et où une même personne doit surveiller et travailler sur un grand nombre de batteries disposées dans une même halle. En outre, les verrous correspondants peuvent être l'objet de divers défauts de fonctionnement ou d'usure, et donc exigent un entretien supplémentaire particulier et même parfois leur remplacement.

C'est pourquoi la présente invention a pour but de fournir une enceinte du type précité dans laquelle le verrouillage et le déverrouillage des châssis en position d'obturation ou en position d'accès, soit parfaitement automatique tout en demeurant fiable.

A cet effet, l'invention a pour objet une enceinte du type précité, caractérisée en ce que le ou chaque lien flexible est fixé à demeure sur les deux moyens de support, au moins sur l'un d'eux audit niveau intermédiaire, tandis que le châssis mobile porte transversalement par rapport à sa direction de déplacement, des moyens de décalage du lien flexible entre ledit niveau intermédiaire et l'un des niveaux extrêmes de ladite ouverture dans ledit sens transversal.

Dans un mode de réalisation particulier de l'invention, il est prévu , dans le cas où le châssis mobile comprend deux montants reliés à au moins l'une de leurs extrémités de manière à délimiter une ouverture sensiblement aux dimensions de celle du compartiment, des moyens de décalage associés à chacun des montants, mais à décalage de sens inverse, tandis que le lien flexible est fixé à ses deux extrémités audit niveau intermédiiare sur les deux moyens de support.

De manière particulièrement avantageuse, il est prévu un second lien flexible fixé et tendu de même que le premier lien, mais à un second niveau intermédiaire, différent du premier, et en ce que le ou les moyens de décalage associés à ce second lien est ou sont un ou des moyens de décalage en sens opposé par rapport à celui ou ceux du premier lien.

De préférence, il est prévu une paire de premiers liens flexibles et une paire de seconds liens flexibles suivant quatre niveaux intermédiaires différents entre eux, le châssis mobile ou chaque montant du châssis mobile comportant deux jeux de moyens de décalage dans un sens et deux autres jeux de moyens de décalage suivant le sens opposé.

Avantageusement, les moyens de décalage ou chaque jeu de moyens de décalage comprennent une paire de poulies d'axes perpendiculaires au plan du châssis et du lien flexible.

D'autres caractéristiques et avantages de l'invention ressortiront de la description qui va suivre, à titre d'exemple non limitatif et en regard des dessins annexés sur lesquels:

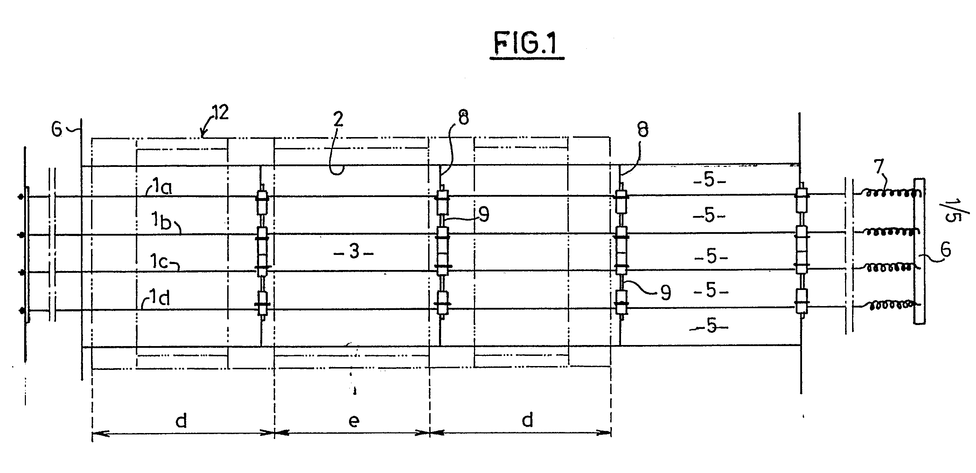

- la Fig. 1 représente schématiquement une vue de face (avec arrachement sur chacun de ses deux côtés) d'une enceinte suivant un mode de réalisation particulier conforme à l'invention;

- la Fig. 2 représente une vue de côté d'un dispositif de guidage correspondant à une cloison et à un seul étage de cette enceinte, le châssis mobile étant disposé en avant ou en arrière de ce dispositif par rapport au plan de la Fig.

- la Fig. 3 représente en perspective l'une des mâchoires mobiles de ce dispositif de guidage;

- la Fig. 4 représente une vue de face analogue à celle de la Fig. 1, mais à plus grande échelle et partielle, limitée à l'emplacement du châssis mobile;

- la Fig. 5 représente une vue analogue à celle de la Fig. 2, mais le châssis mobile étant engagé dans le dispositif de guidage et les crosses extérieures étant supposées enlevées;

- la Fig. 6 représente une vue de détail, correspondant à une vue de face de l'objet de la Fig.5, la ou les plaques du châssis étant supposées enlevées;

Dans l'enceinte représentée par ces figures, les cages (recevant par exemple quatre poules par cage) sont normalement assemblées par deux rangées dos-à-dos sur plusieurs niveaux. Cette conception est dans l'état actuel des techniques d'élevage assez standard. Toutefois, au lieu que chaque cage soit fermée par une porte coulissante, déplaçable et verrouillable à la main, la succession des portes individuelles est remplacée par quatre cables souples horizontaux 1a à 1d divisant
les ouvertures 2 sur la face avant des compartiments 3 des cages 4
en cinq espaces libres horizontaux 5 suffisants pour le passage
de la tête et du cou des oiseaux, mais insuffisants pour le
passage du corps, même s'ils tentent de s'échapper par toute
action possible.

Les quatre câbles 1a à 1d sont fixés individuellement aux deux extrémités de chaque rangée de cage, dont la
longueur n'influence pas le fonctionnement, sur deux supports
verticaux ou montants fixes 6. A une extrémité, la fixation est
simple, à l'autre, un ressort 7 par câble doit assurer une
tension constante de 5 à 10 kg.

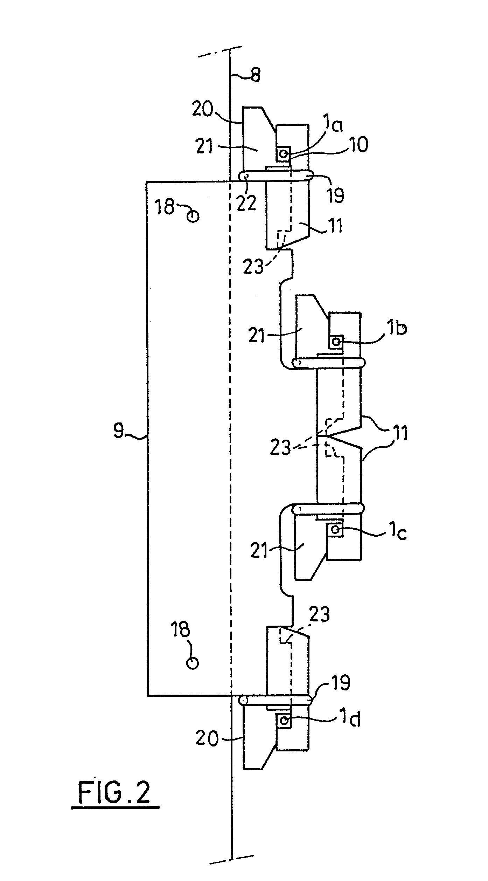

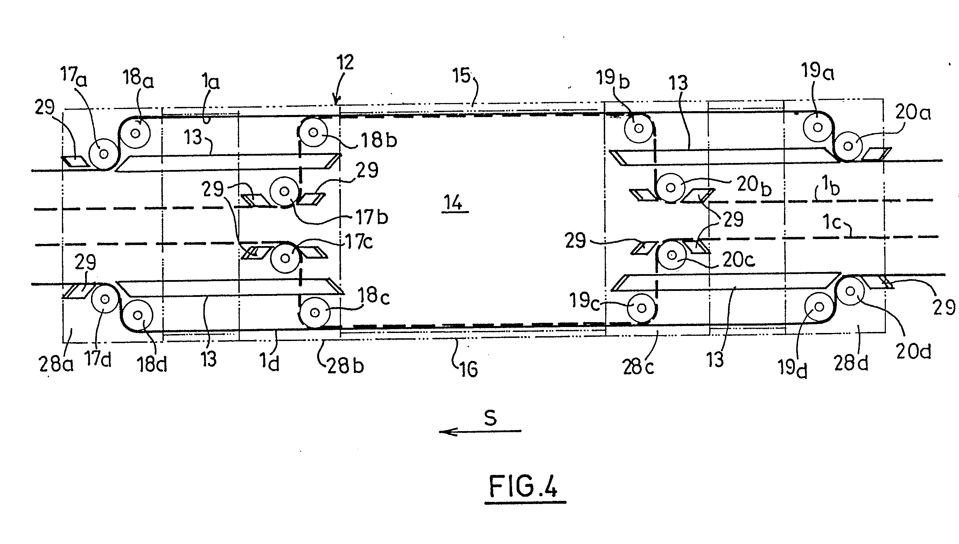

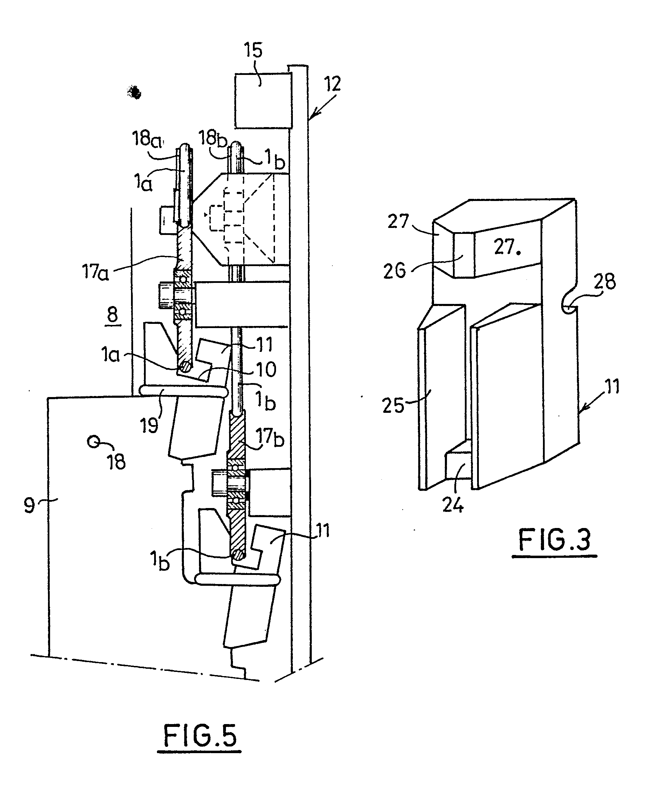

Au niveau de chaque cloison 8 entre compartiments
3, il est prévu un dispositif de guidage ou guide 9 à quatre
logements individuels 10 adaptés pour maintenir et positionner
chacun des quatre câbles 1a à 1d. Comme le montre plus en détail
la Fig. 2, ces logements 10 sont fermés par des pinces mobiles
individuelles ou mâchoires 11. Ces pinces 11 ont la faculté
d'être ouvertes (Fig. 5) pour l'échappement du câble et fermées
pour le maintien du câble.

Devant l'ensemble des compartiments, peut se
déplacer une porte mobile 12 autoportée et guidée par deux paires de tronçons de
rails 13 s'engageant dans les logements supérieurs et inférieurs
10 des guides 9 de sorte qu'elle peut être déplacée dans un
sens ou dans l'autre par glissement d'un guide 9 à l'autre sur
toute la longueur de la rangée.

Comme le montre plus précisément la Fig. 4, la
porte 12 placée successivement devant chaque cage 3 réalise une
ouverture 14 par renvoi des deux câbles supérieurs 1a et 1b
au-delà du bord supérieur de cette ouverture (niveau supérieur
15 correspondant à la traverse supérieure de la porte) et par
renvoi des deux câbles 1c et 1d inférieurs au-delà du bord
inférieur (niveau inférieur 16 correspondant à la traverse inférieure de la porte). Un circuit permanent des quatre câbles 1a à 1d
avec pour chacun un jeu de quatre poulies 17a-18a-19a-20a,
17b-18b-19b-20b, 17c-18c-19c-20c, 17d-18d-19d-20d permet cette opération.

Comme le montre plus en détail la Fig. 2, chaque dispositif de guidage ou guide 9 est constitué d'une platine en matière plastique moulée par injection fixée sur sa moitié arrière sur la cloison 8 associée par des vis ou rivets 18. Sa moitié avant présente quatre encoches en L formant deux côtés des logements 10 recevant les câbles et qui sont complétés par association avec les quatre pinces mobiles individuelles 11 maintenues par des anneaux toriques 19 entourant ces pinces et engagés sur l'arrière dans des entailles verticales allongées 20 ménagées derrière les becs en L 21. Des gorges coudées 22 ménagées au fond des entailles 20 permettent de placer les anneaux toriques 19 qui assurent la fixation élastique des pinces ou mâchoires 11. La platine 9 présente en outre, au dessous de chaque encoche (pour les deux encoches supérieures qui sont ouvertes vers l'avant et vers le haut) et au dessus de l'encoche (pour les deux encoches inférieures, ouvertes vers l'avant et vers le bas), un créneau 23 qui permet de recevoir un tenon 24 de la pince, ce tenon faisant office de pivot et assurant le maintien en place de cette pince. Des pans coupés 25 réalisés à l'extrémité des becs 21 (inclinés ver le haut pour les deux becs supérieurs, et vers le bas pour les deux becs inférieurs) permettent le centrage des rails 13 pendant le déplacement de la porte 12. Il faut enfin souligner l'existence d'un décalage dans le plan vertical entre les câbles extérieurs 1a et 1d et les câbles intérieurs 1b et 1c, ce décalage permettant le renvoi et le croisement des câbles sans accrochage et étant bien entendu également prévu de la même manière pour les becs 21, les entailles 20, les logements 10 et les créneaux 23 (les éléments extrêmes décalés vers l'intérieur de la cage et les éléments intermédiaires vers l'extérieur).

Comme le montre de manière plus précise la vue en perspective de la Fig. 3, une pince mobile individuelle 11, réalisée par exemple en matière plastique moulée par injection s'adaptant sur le câble 1a à 1d, est constituée par un bloc à peu près parallélépipédique sur la face arrière duquel sont prévues, en saillie, deux joues 25 qui forment une glissière en U orientée verticalement, le tenon 24, légèrement en retrait par rapport aux joues 25 et situé entre les extrémités inférieures de celles-ci, et qui s'engage dans un créneau 23 du
guide 9 et enfin, à son extrémité supérieure, un bec 26 qui
forme le quatrième côté du logement carré 10 dont deux côtés
sont déjà formés par le guide-câble et le troisième par la
surface plane qui demeure à l'arrière de la pince, entre les
ailes 25 et le bec 26.

L'anneau torique 19 qui est maintenu par la
gorge 22 du guide-câble 9 et une autre gorge 28 ménagée sur la
face avant de la pince 11 assure la fixation élastique de la
pince permettant son ouverture. Il est par exemple constitué
en un élastomère insensible aux conditions ambiantes.

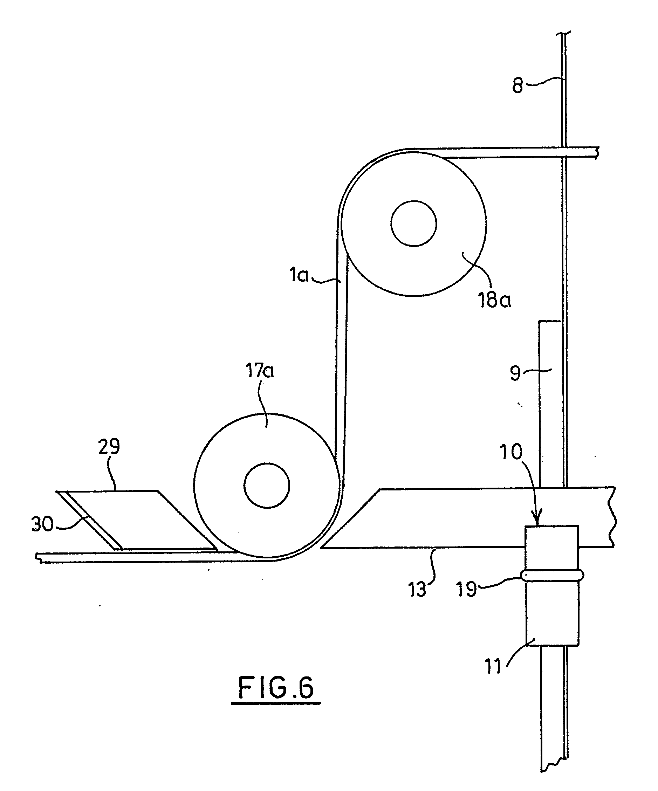

Comme le montrent enfin les Fig. 4 et 5, la
porte 12 est constituée d'un cadre porteur dans lequel les deux
traverses 15 et 16 relient quatre plaques verticales 28a, 28b,
28c et 28d disposées deux de chaque côté de l'ouverture 14 et
portant chacune quatre poulies et quatre crosses ou Vés 29
d'ouverture des pinces mobiles ayant la forme d'un parallélogramme dont l'épaisseur est égale à celle de la poulie, le
côté 30 opposé à la poulie étant biseauté comme le montre la
Fig. 6. Dans le cas des câbles extérieurs 1a et 1d, quatre des seize
crosses 29 sont remplacées par les tronçons de rails 13 qui
assurent la sustentation et le guidage de la porte.

Le cheminement de chaque câble est le même,
soit, par exemple décrit pour le câble 1a: renvoi du câble à
l'extérieur par les poulies 17a et 18a qui sont tangentes avec les deux
brins horizontaux du câble, la poulie 18a, qui a une même tangente (brin
vertical) que la poulie 17a, renvoyant le câble vers l'autre
extrémité de la porte au niveau de la traverse 15, ce qui dégage
l'ouverture 14 de la cage, tandis qu'un mouvement de décalage
inverse est réalisé à cette autre extrémité par les poulies 19a
et 20a qui sont montées sur la plaque extrême 28d (de même
que les poulies 17a et 18a sont montées sur l'autre plaque
extrême 28a). Sur les mêmes plaques 28a et 28d sont montées
également les poulies 17d-18d et 19d-20d servent au décalage vers
le bas du câble inférieur 1d, au niveau de la traverse 16. Par
contre, c'est sur les plaques intermédiaires 28b et 28c que sont
montées les poulies 17b-18b (plaque 28b) et 19b-20b (plaque 28c) pour le câble intermédiaire supérieur 1b, ainsi que les poulies 17c-18c (plaque 28b) et 19c-20c (plaque 28c) pour le câble intermédiaire inférieur 1c.

Les côtés biseautés 30 de ces crosses permettent d'une part un autocentrage par appui sur les plans inclinés 27 des becs 21 et d'autre part l'ouverture de ces pinces par appui sur les plans inclinés 27 des becs 26 de ces pinces. Ainsi, la crosse 29 s'engage entre le guide-câble 9 et la pince 11, puis, la poulie tangente 17a avec son câble associé 1a s'engage à la suite de la crosse entre ces mêmes pièces, comme le montre la Fig. 5.

De ce fait, on obtient simultanément, quand la porte 12 est déplacée dans un sens donné S par exemple de la droite vers la gauche sur la Fig. 4, d'une part l'ouverture des pinces 11 et l'extraction des câbles par les crosses 29 et les poulies tangentes (17a, 17b, 17c et 17d) situées à l'avant de la porte, et d'autre part l'ouverture des pinces et la remise en place des câbles par les crosses 29 et les poulies tangentes (20a, 20b, 20c et 20d) situées à l'arrière de la porte. Le mécanisme bien entendu est réversible dans l'autre sens, les poulies changent pour cela de rôle sans complication et les crosses situées à l'avant des poulies ayant un rôle actif quand les crosses situées à l'arrière des poulies ont un rôle passif.

Sur chaque paire de poulies 17a-18a, 17b-18b, 19b-20b, 19a-20a, 17d-18d, 17c-18c, 19c-20c et 19d-20d, c'est dans chaque cas la poulie située le plus près du plan horizontal moyen de la porte, à savoir 17a, 17b, 20b, 20a, 17d, 17c, 20c et 20d, qui est encadrée, dans le sens horizontal et dans le plan de la porte, soit par une crosse 29 et un rail 13 (17a, 20a, 17d, 20d), soit par deux crosses 29 (17b, 20b, 17c, 20c).

Grâce à l'agencement ainsi décrit, les trois mouvements manuels nécessaires avec les modèles classiques de portes coulissantes à verrouillage peuvent être supprimés. Les mouvements :

1° déverrouillage de la porte coulissante,

2° ouverture de la porte par déplacement latéral sur la droite ou la gauche,

3° fermeture de la porte par retour à sa place suffisamment puissant pour provoquer le verrouillage, sont remplacés par un déplacement unique de la porte dans un sens ou dans l'autre avec positionnement et arrêt pour l'ouverture devant chaque cage. Ce simple déplacement réalise en une seule opération l'ouverture de la cage centrée derrière la porte, la fermeture des cages situées de part et d'autre, et le verrouilgage automatique dans cette position.

La porte unique prévue par rangée horizontale peut être éventuellement déplacée par le chariot motorisé de distribution des aliments, grâce à l'adaptation d'un bras de liaison et d'un arrêt-positionnement automatique à chaque cage.

Il est clair que si $d$ est la distance séparant le bord extérieur de la plaque extrême 28a ou 28d du bord intérieur de la plaque intermédiaire voisine 28b ou 28c, et $e$ la largeur d'ouverture 14 du châssis-porte, il devra nécessairement être prévu sur le côté de chaque cage extrême de la rangée un espace libre au moins égal à $d$ + $e$ de manière à permettre le dégagement de la porte sur l'un ou l'autre côté tout en assurant l'obturation de l'ouverture de la dernière cage par l'encombrement des paires de plaques 28a-28b ou 28c-28d.

- 10 -

REVENDICATIONS

1°) Enceinte pour parquer les animaux, du type comprenant d'une part un bâti délimitant au moins un compartiment (3) et présentant sur au moins un côté une ouverture de part et d'autre de laquelle sont disposés deux moyens de support (6) suivant l'une de ses deux directions principales correspondant au contour du bâti et en retrait par rapport à elle, l'un d'eux en étant situé à une distance égale à au moins sa dimension (e) suivant la direction choisie, tandis qu'il est fixé à ce moyen de support au moins un lien flexible (1a) orienté suivant ladite direction et à un niveau intermédiaire de l'ouverture suivant l'autre direction, et d'autre part, un châssis mobile (12) suivant la première direction entre deux positions dans l'une desquelles ledit lien (1a) est situé en travers de l'ouverture (3) suivant ladite direction, tandis que dans l'autre il en est situé au dehors, caractérisée en ce que le ou chaque lien flexible (1a,1b,1c,1d) est fixé à demeure sur les deux moyens de support (6), au moins sur l'un d'eux audit niveau intermédiaire, tandis que le châssis mobile (12) porte, tranversalement par rapport à sa direction de déplacement, des moyens (17a-18a) de décalage du lien flexible entre ledit niveau intermédiaire et l'un des niveaux extrêmes (15,16) de ladite ouverture.

2°) Enceinte selon la revendication 1, caractérisée en ce que, dans le cas où le châssis mobile (12) comprend deux montants (28a,28b,28c,28d) reliés à au moins l'une de leurs extrémités, (15,16) de manière à délimiter une ouverture (14) sensiblement aux dimensions de celle du compartiment (3), il est prévu des moyens de décalage (17a,18a,19a,20a) associés à chacun des montants, mais à décalage de sens inverse, tandis que le lien flexible (1a) est fixé à ses deux extrémités audit niveau intermédiaire sur les deux moyens de support (6).

3°) Enceinte suivant l'une quelconque des revendications 1 et 2, caractérisée en ce qu'il est prévu un second lien flexible (1d) fixé et tendu de même que le premier lien, mais à un second niveau intermédiaire, différent du premier, et

0153256

- 11 -

en ce que le ou les moyens de décalage (17d,18d,19d,20d) associés à ce second lien est ou sont un ou des moyens de décalage
en sens opposé par rapport à celui ou ceux du premier lien.

4°) Enceinte suivant l'une quelconque des revendications 1 à 3, caractérisée en ce qu'il est prévu une paire
de premiers liens flexibles (1a,1b) et une paire de seconds liens
flexibles (1c,1d) suivant quatre niveaux intermédiaires différents
entre eux, le châssis mobile (12) ou chaque montant du châssis
mobile comportant deux jeux de moyens de décalage (17a,18a,19a,
20a,17b,18b,19b,20b) dans un sens et deux autres jeux de moyens
(17c,18c,19c,20c,17d,18d,19d,20d) de décalage suivant le sens
opposé.

5°) Enceinte suivant l'une quelconque des revendications 1 à 4, caractérisée en ce que les moyens de décalage
(17a,18a) ou chaque jeu de moyens de décalage comprennent une paire de poulies d'axes perpendiculaires au plan du châssis (12)
et du lien flexible (1a).

0153256

## FIG.1

FIG.1 — 1/5, 6, 7, -5-, 8, 9, d, e, 2, -3-, 12, 1a, 1b, 1c, 1d, 6

FIG.2

FIG.4

0153256

15

12

18a  18b

1b

1a

17a

8

1a

11

10

19

1b

18

17b

9

11

1b

FIG.5

27

27.

26

28

25

11

24

FIG.3

FIG.6